(19) Europäisches Patentamt
European Patent Office
Office européen des brevets

(11) Veröffentlichungsnummer: **0 332 966**
**A1**

## (12) EUROPÄISCHE PATENTANMELDUNG

(21) Anmeldenummer: **89103869.7**

(51) Int. Cl.4: **C08G 75/14 , C08G 75/02**

(22) Anmeldetag: **06.03.89**

(30) Priorität: **15.03.88 DE 3808496**

(43) Veröffentlichungstag der Anmeldung:
**20.09.89 Patentblatt 89/38**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Köhler, Karl-Heinz, Dr.**
**Buschstrasse 165**
**D-4150 Krefeld(DE)**
Erfinder: **Reinking, Klaus, Dr.**
**Robert-Stolz-Strasse 16b**
**D-5632 Wermelskirchen(DE)**

# (54) Neue hochmolekulare, gegebenenfalls verzweigte Co-Polyarylensulfide, Verfahren zu deren Herstellung und deren Verwendung.

(57) Die Erfindung betrifft neue hochmolekulare, gegebenenfalls verzweigte Co-Polyarylensulfide, hergestellt durch Umsetzung von Halogenaromaten und Dihalogenphenyl-pyrazol-3-onen, in einem polaren Lösungsmittel, wobei dem Reaktionsgemisch 0,2-100 Mol-%, bezogen auf die Dihalogenaromaten, einer Aminosäure zugegeben werden und deren Verwendung als Einbettmasse für elektronische Bauteile.

EP 0 332 966 A1

# Neue hochmolekulare, gegebenenfalls verzweigte Co-Polyarylensulfide, Verfahren zu deren Herstellung und deren Verwendung

Die Erfindung betrifft neue hochmolekulare, gegebenenfalls verzweigte Co-Polyarylensulfide, hergestellt durch Umsetzung von Halogenaromaten und Dihalogenphenyl-pyrazol-3-onen, mit Schwefelspendern in einem polaren Lösungsmittel, wobei dem Reaktionsgemisch 0,2-100 Mol-%, bezogen auf die Dihalogenaromaten, einer Aminosäure zugegeben werden und deren Verwendung als Einbettmasse für elektronische Bauteile.

Co-Polyarylensulfide und ihre Herstellung sind bekannt (z.B. US-PS 33 54 129). Im Unterschied zu bekannten Polyarylensulfiden, wie z.B. Polyphenylensulfid haben sie eine verringerte Kristallisationsgeschwindigkeit.

Für bestimmte Anwendungszwecke, z.B. bei der Herstellung von elektronischen Bauteilen soll das dazu verwendete Material eine hinreichend langsame Kristallisationsgeschwindigkeit zeigen, so daß der Schmelzpunkt des Materials im Vergleich zu einem reinen Polyarylensulfid nicht wesentlich vermindert ist. Die Kristallisationsgeschwindigkeit von Polyarylensulfiden nimmt mit zunehmender Molmasse ab, die angestrebten Anwendungen erfordern jedoch leicht fließende Produkte.

Es wurde nun gefunden, daß gegebenenfalls verzweigte Copolyarylensulfide, die durch Umsetzung von Dihalogenaromaten und Dihalogenphenylpyrazolon-3-onen mit Schwefelspendern hergestellt worden sind, eine hinreichend langsame Kristallisationsgeschwindigkeit zeigen. Ihr Schmelzpunkt und Kristallisationsgrad ist im Vergleich zum Polyarylensulfid nur geringfügig erniedrigt.

Gegenstand der Erfindung sind daher Copolyarlyensulfide, vorzugsweise Copolyphenylensulfide die zu 99,5 bis 90 Mol-% bezogen auf das Copolymere aus wiederkehrenden Einheiten der Formel (I)

$-[S-Ar]-$ (I),

in welcher

Ar für $C_6$-$C_{24}$-Arylen, vorzugsweise Phenylen steht

und

0,5 bis 10 Mol-%, bezogen auf das Copolymere aus wiederkehrenden Einheiten der Formel (II)

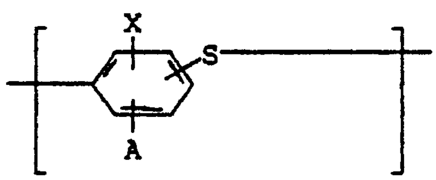 (II),

in welcher

A für einen substituierten Pyrazol-3-on-Rest und

X für H, $SO_3H$ steht

und

gegebenenfalls bis zu 5 Mol-%, vorzugsweise 0,1 bis 2,5 Mol-%, bezogen auf die Summe der Einheiten der Formeln (I) und (II) aus wiederkehrenden Einheiten der Formel (III)

$[Ar]_n$ (III),

in welcher

Ar für einen aromatischen Rest mit 6 bis 30 C-Atomen steht und

n für die Zahl 3 oder 4 steht,

wobei die Struktureinheiten der Formel (I), (II) und gegebenenfalls (III) überwiegend statistisch im Copolymeren verteilt sein können.

In Formel (II) steht A für einen substituierten Pyrazol-3-on-Rest, der durch die tautomeren Formeln (IIa), (IIb), (IIc)

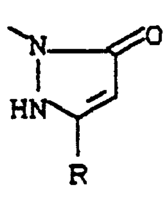 (IIa), 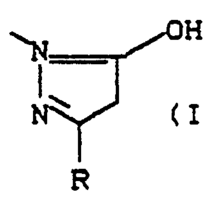 (IIb), 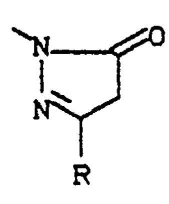 (IIc),

in welchen
R für $C_1$-$C_7$-Alkyl und $C_6$-$C_{10}$-Aryl steht und in Formel (II) der Schwefel S und der Pyrazolon-Stickstoff N zueineinander in o-, m- oder p-Position am Phenylkern stehen können,
wiedergegeben werden kann.

Ein weiterer Gegenstand der Erfindung ist ein Verfahren zur Herstellung der erfindungsgemäßen gegebenenfalls verzweigten Co-Polyarylensulfiden, vorzugsweise Copolyphenylensulfide, dadurch gekennzeichnet, daß
Halogenaromaten der Formel (Ia)
$X\{Ar\}X$ (Ia),
in welcher
X für zueinander meta- und/oder para-ständiges Halogen wie Cl und Br steht und
Ar für $C_6$-$C_{24}$-Arylen steht,
vorzugsweise

a) 50-100 Mol-% Dihalogenaromaten der Formel

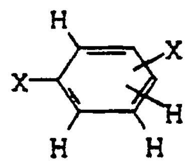

(IV),

und 0-50 Mol-% Dihalogenaromaten der Formel

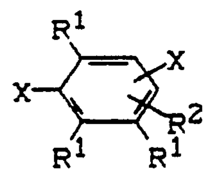

(V),

in denen
X für zueinander meta- oder para-ständiges Halogen wie Chlor oder Brom steht und
$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aroma tischen oder heterocyclischen, bis zu drei Heteroatomen wie N, O, S enthaltenden Ring verknüpft sein können und immer ein Rest $R^1$ verschieden von Wasserstoff ist
und

b) 0-5 Mol-%, bevorzugt 0,1-2,5 Mol-%, bezogen auf die Summe der Dihalogenaromaten der Formel IV und V, eines Tri- oder Tetrahalogenaromaten der Formel
$ArX_n$ (VI),
wobei
Ar ein aromatischer $C_6$-$C_{14}$-Ring oder ein heterocyclischer Rest mit 5 bis 14 Ringatomen, wobei bis zu 3 Ring-C-Atome durch Heteroatome wie N, O, S ersetzt sein können, ist,
X für Halogen wie Chlor oder Brom steht und
n für die Zahl 3 oder 4 steht
und

c) Alkalisulfide, bevorzugt Natrium- oder Kaliumsulfid oder deren Mischung, bevorzugt in Form ihrer Hydrate oder wäßrigen Mischungen, gegebenenfalls zusammen mit geringen Mengen Alkalihydroxiden wie Natrium- und Kaliumhydroxid, wobei das molare Verhältnis von (a+b) : c im Bereich von 0,75:1 bis 1,25:1 liegen kann,

d) gegebenenfalls in Anwesenheit von Katalysatoren wie Alkalicarboxylaten, Alkaliphosphaten, Alkaliphosphonaten, Alkalifluoriden, Alkalialkylsulfonaten oder N,N-Dialkylcarbonsäureamiden, wobei dem Reaktionsgemisch 0,2-50 Mol-%, bevorzugt 0,2-25 Mol-%, bezogen auf die Mole Dihalogenaromat, einer Aminosäure zugegeben wird,
und

e) 0,5 bis 10 Mol-% bezogen auf die Summe der Komponenten der Formeln (IV), (V) und (VI) von Dihalogenphenylpyrazol-3-onen der Formel (VII)

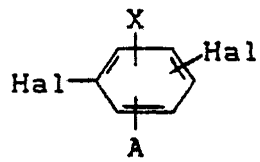

(VII),

in welcher
A für einen Pyrazol-3-on-Rest der Formel II steht,
X für Wasserstoff (H), $SO_3H$ steht und
Hal für Halogen wie Chlor und Brom steht,
miteinander umgesetzt werden.

Die Reaktionszeit kann bis zu 24 Stunden, vorzugsweise 2 bis 18 Stunden betragen. Die Reaktionstemperaturen betragen 150 bis 280 °C.

Die Umsetzung kann in verschiedener Weise erfolgen:

Die Alkalisulfide werden vorzugsweise in Form ihrer Hydrate und wäßrigen Mischungen oder wäßrigen Lösungen eingesetzt. Sie werden zur Umsetzung partiell, oder vorzugsweise vollständig entwässert. Das im Umsetzungsgemisch vorhandene Wasser wird aus dem Ansatz destilliert.

Die Wasserdestillation kann direkt oder mit Hilfe von Azeotropbildnern, wobei bevorzugt als Azeotropbildner die Dihalogenaromaten eingesetzt werden, erfolgen. Für die Entwässerung können alle Reaktionspartner gemischt werden und die Entwässerung des Gesamtgemisches durchgeführt werden. Beliebig andere Reihenfolgen der Zugabe der Reaktionskomponenten vor und nach der Entwässerung sind auch möglich.

Vorzugsweise werden die Reaktionspartner zusammen mit Aminosäuren in Anwesenheit des polaren Lösungsmittels kontinuierlich, unter gleichzeitiger Entfernung des Wassers zusammengeführt. Bei dieser Verfahrensweise kann eine einsetzende Umsetzung über die Dosierungsraten gesteuert werden. Längere Verweilzeiten des Wassers können so vermieden werden.

Wird völlig entwässert, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Zugabe des Comonomeren kann zu jedem beliebigen Zeitpunkt der Reaktion erfolgen, vorzugsweise am Ende der Entwässerungsphase.

Die Aufarbeitung des Umsetzungsgemisches und die Isolierung der Co-Polyarylensulfide können in bekannter Weise erfolgen.

Die Co-Polyarylensulfide können direkt aus der Reaktionslösung oder erst z.B. nach Zugabe von Wasser und/oder verdünnten Säuren oder organischen Lösungsmitteln mit geringer Löslichkeit für Polyarylensulfide nach üblichen Verfahrensweisen abgetrennt werden, beispielsweise durch Filtration oder durch Zentrifugieren. Nach der Abtrennung des Produkts schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Co-Polyarylensulfid kann auch beispielsweise durch Abdestillieren des Lösungsmittels und eine anschließende Wäsche, wie oben beschrieben, gewonnen werden.

Die Alkalisulfide können z.B. auch aus $H_2S$ und den Alkalihydroxiden bzw. aus den Hydrogensulfiden und Alkalihydroxiden erhalten werden.

Je nach Anteil an Alkalihydrogensulfid, das als Verunreinigung im Alkalisulfid in der Reaktionslösung enthalten ist, können zusätzlich bestimmte Anteile Alkalihydroxid zudosiert werden. Gegebenenfalls können auch anstelle der Alkalihydroxide solche Verbindungen zugegeben werden, die unter den Reaktionsbedingungen Alkalihydroxide abspalten bzw. bilden.

Sollen verzweigte Co-Polyarylensulfide hergestellt werden, sollten mindestens 0,05 Mol-% eines Tri- oder Tetrahalogenaromaten der Formel (VI) eingesetzt werden.

Beispiele für erfindungsgemäß einzusetzende Dihalogenaromaten der Formel (IV) sind: p-Dichlorbenzol, p-Dibrombenzol, 1-Chlor-4-brombenzol, und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (V) sind: 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäß einzusetzende Tri- bzw. Tetrahalogenaromaten der Formel (VI) sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2′-4,4′-Tetrachlorbiphenyl, 1,3,5-Trichlortriazin.

Beispiele für Pyrazolone der Formel VII sind 2-(2′,5′-Dichlorphenyl)-2,4-dihydro-5-methyl-3H-pyrazol-3-on; 2-(2′,5′,-Dichlor-4-sulfophenyl)-2,4-dihydro-5-methyl-3H-pyrazol-3-on; 2-(2′,5′-Dichlorphenyl)-2,4-dihydro-5-phenyl-3H-pyrazol-3-on; 2-(2′,5′-Dichlor-4-sulfophenyl)-2,4-dihydro-5-phenyl-3H-pyrazol-3-on.

Generell kann jedes polare Lösungsmittel für die Reaktion eingesetzt werden, das eine ausreichende Löslichkeit der organischen und gegebenenfalls anorganischen Reaktanten unter den Reaktionsbedingungen gewährleistet. Bevorzugt werden N-Alkyllactame verwendet.

N-Alkyllactame sind solche von Aminosäuren mit 3-11 C-Atomen, die gegebenenfalls Substituenten am Kohlenstoffgerüst tragen können, die unter Reaktionsbedingungen inert sind.

Beispielsweise finden als N-Alkyllactame Verwendung:
N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isobutyl-2-piperidon, N-Methyl-6-methyl-2-piperidon, N-Methyl-3-ethyl-2-piperidon.

Es können Mischungen der vorstehenden Lösungsmittel gewählt werden.

Als einsetzbare Aminosäuren kommen bevorzugt offenkettige oder cyclische aliphatische $C_1$-$C_{20}$-Aminosäuren in Frage, die seitenständige Reste wie z.B. $C_1$-$C_4$-Alkyl, $C_6$-$C_{14}$-Aryl- bzw. deren Kombination, $C_1$-$C_4$-Alkoxy-Thio-$C_1$-$C_4$-alkylreste oder einen heterocyclischen $C_6$-$C_{14}$-Rest mit bis zu drei Heteroatomen wie N, O, S tragen könen. Die Aminogruppe kann dabei als $NH_2$-, NRH- oder $NR_2$-Gruppierung vorliegen, wobei R ein beliebiger Alkylrest, bevorzugt ein $C_1$- bis $C_4$-Alkylrest, ist. Zwei Reste R können auch die beiden Enden einer Alkylenkette mit seitenständiger Carboxylgruppe sein, die zusammen mit der NH-Gruppierung einen Cyclus bildet.

Die Aminogruppe kann in α-, β-, γ- bzw. ω-Stellung fixiert sein. Es können gegebenenfalls auch Diaminosäuren bzw. Aminodicarbonsäuren eingesetezt werden.

Beispielsweise folgende Aminosäuren seien genannt:
Glycin, α-Alanin, β-Alanin (α- und β-Aminopropionsäure), α-Aminobuttersäure, γ-Aminobuttersäure, α-Amino-isovaleriansäure (Valin), α-Amino-isocapronsäure (Leucin), ε-Aminocapronsäure, 11-Aminoundecansäure, N-Methylaminoessigsäure (Sarkosin), N-Methyl-α-aminopropionsäure, N-methyl-β-aminopropionsäure, N-Methyl-γ-aminobuttersäure, N-Methyl-ε-Aminocapronsäure, N-Methyl-11-aminoundecansäure. Aminobutandisäure (Asparaginsäure), 2-Aminopentandisäure (Glutaminsäure), 2-Amio-4-methylthiobutansäure (Methionin), Phenylalanin, Prolin.

Die Reaktion kann gegebenenfalls zusätzlich in Anwesenheit von üblichen Katalysatoren wie z.B.:
Alkalicarboxylaten (DE-AS 24 53 749), Lithiumhalogeniden oder Alkalicarboxylaten (DE-OS 26 23 362), Lithiumchlorid oder Lithiumcarboxylat (DE-OS 26 23 363), Alkalicarbonaten in Kombination mit Alkalicarboxylaten (US-PS 40 38 259), Lithiumacetat (DE-OS 26 23 333), Trialkaliphosphaten (DE-OS 29 30 710), Trialkaliphosphonaten (DE-OS 20 30 797), Alkalifluoriden (DE-OS 30 19 732), Alkalisulfonaten (US-PS 40 38 260), Lithiumcarbonat und Lithiumborat (US-PS 40 30 518) durchgeführt werden.

Die erfindungsgemäßen Co-Polyarylensulfide können mit anderen Polymeren, wie Pigmenten und Füllstoffen - beispielsweise Graphit, Metallpulver, Glaspulver, Quarzmehl, Glasfasern oder Kohlefasern -, gemischt oder mit den für Polyarylensulfide üblichen Additiven, beispielsweise üblichen Stabilisatoren oder Entformungsmitteln, versetzt werden.

Im allgemeinen wird das Schmelzfließverhalten von Polyarylensulfiden nach ASTM 1238-70 bei 316 °C unter Verwendung eines 5-kg-Gewichtes gemessen und in g/10 min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität ηm der Polymerschmelze (in Pa.s) bei 306 °C in Abhängigkeit von der Schubspannung (in Pa) mit Hilfe des Instron-Rotationsviskosimeters bestimmt.

Man kann auf diese Weise die schmelzviskosität in einem sehr weiteren Bereich von $10^{-1}$ bis $10^7$ Pa.s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Firma Instron. Durchmesser des Kegels und der Platte 2 cm. Angegeben wird die Schmelzviskosität, die bei einer Schubspannung von $\tau$ = $10^2$ Pa gemessen wird.

Die erfindungsgemäßen Co-Polyarylensulfide besitzen direkt nach der Isolierung aus dem Reaktionsgemisch im allgemeinen Schmelzviskositäten von 0,3 x $10^3$ bis 5 x $10^6$ Pa.s; vorzugsweise von 1,5 x $10^3$ bis $10^4$ Pa.s und gute farbliche Eigenschaften.

Das Kristallisations-Verhalten der Copolyarylensulfide wird durch Differential-Scanning-Colorimetrie (DSC) auf dem Gerät DSC 2 der Fa. Perkin-Elmer bestimmt. Die Proben-Einwaagen betragen 8 bis 11 mg, die Heiz- und Kühlraten sind 20 °C/min. Die Probe wird nach dem ersten Aufheizen mindestns 1 bis 2 min in der Schmelze gehalten, dann abgekühlt und erneut bis zur Schmelze aufgeheizt. Die dabei erhaltenen Daten sind die Kristallisationstemperatur: $T_K$ (°C) und die Enthalpie $\Delta J_K$ (J/g), sowie die Schmelztemperatur $T_M$ (°C) und $\Delta H_M$ (J/g). Die erfindungsgemäßen Copolyarylensulfide mit langsamer Kristallisation zeichnen sich dadurch aus, daß $\Delta T = T_M - T_K$ größer/gleich 50°C und kleiner 80°C ist.

Sie können direkt durch Extrusion, Extrusionsblasen, Spritzgießen oder sonst übliche Verarbeitungstechniken zu Folien, Formkörpern oder Fasern verarbeitet werden. Diese können zur Herstellung von Formgebilden Verwendung finden, z.B. vorzugsweise als Umhüllungs- und Einbettmassen für elektronische Bauteile, chemikalienresistente und verwitterungsstabile Teile und Apparateteile wie Pumpengehäuse und Pumpenflügelräder, Dichtungsringe, Teile von Büromaschinen und Fernmeldeeinrichtungen sowie Haushaltsgeräte, Ventile, Kugellagerteile u.s.w.

Beispiel 1

Co-PPS mit 2 mol-% 2′,5′-Phenylen-2,4-dihydro-2-(5-methyl)pyrazolon-3-Einheiten.

In einem 5-l-Edelstahl-Reaktor mit Blattrührer, 2 Tropftrichtern, Wasserabscheider und Rückflußkühler werden 2.700 g (2,67 l) N-Methylcaprolactam und 587,0 g (3,993 Mol) p-Dichlorbenzol unter $R_2$-Schutzgas vorgelegt und auf 215°C aufgeheizt. Über einen Zeitraum von ca. 3,5 h wird unter Rühren eine wäßrige Lösung, hergestellt aus 1147,5 g $Na_2S$-$3H_2O$ (8,94 Mol), 325 g $H_2O$, 141,2 g (1,24 Mol) Caprolactam und 4,3 g (0,107 Mol) NaOH, langsam hinzugetropft. Gleichzeitig werden über einen Zeitraum von 2,5-3 h weitere 648,1 g (4,40 Mol) p-Dichlorbenzol hinzudosiert. Nach beendeter Wasserabscheidung und kurzer Absenkung der Sumpftemperatur auf ca. 170°C werden 40,5 g (0,125 Mol) 2-(2′,5′-Dichlorphenyl)2,4-dihydro-5-methylpyrazolon-3 im Inertgas-Gegenstrom dem Reaktions-Ansatz hinzugeffügt. In ca. 60 min wird die Sumpftemperatur auf ca. 230°C erhöht. Nach weiteren 9-stündigem Rühren wird die Reaktion beendet. Dazu fällt man den Reaktions-Ansatz in einem Gefäß mit einer Vorlage von Isopropanol unter Rühren aus, säuert mit $H_2SO_n$ an und filtriert. Der grobpulvrige weiße Filterkuchen wird mit $H_2O$ gründlich gewaschen und bei 100°C getrocknet.
Ausbeute: 794,5 g (85,9 %)

Die gewichtsmittlere Molmasse Mw beträgt 31.000.

Beispiel 2

Co-PPS mit 3 mol-% 2′,5′-Phenylen-2,4-dihydro-2-(5-methyl)pyrazolon-5-Einheiten.

Herstellung analog Beispiel 1, jedoch wurden insgesamt 1223 g (8,32 Mol) p-Dichlorbenzol und 62,5 g (0,26 Mol) 2-(2′,5′-Dichlorphenyl)-2,4-dihydro-5-methylpyrazolon-3 eingesetzt. Mw: 23.000, Ausbeute: 780 g ≙ 84,3 %.

Beispiel 3

Co-PPS mit 5 mol % 2′,5′-Phenylen-2-(5-methyl)-pyrazolon-3-Einheiten

Herstellung analog Beispiel 1, jedoch wurden insgesamt 1162 g (7,90 Mol) p-Dichlorbenzol und 101,1 g (0,435 Mol) 2-(2′,5′-Dichlorphenyl)2,4-dichlor-5-methylpyrazolon-3 eingesetzt. Mw: 21.000.

Vergleichsbeispiel

PPS ohne Comonomere

Herstellung analog Beispiel 1 ohne Dosierung von Comonomeren, jedoch wurden insgesamt 1207 g (8,21 Mol) p-Dichlorbenzol eingesetzt. Mw: 43.600

Tabelle

| Einfluß des Comonomeren auf das Kristallisations-Verhalten des Co-PPS | | | | | |
|---|---|---|---|---|---|
| Beispiel | mol-% Comonomer | Mw | $T_K$ (°C) | $\Delta H_K$(J/g) | $T_M$(°C) |
| 1 | 2 | 31.000 | 229 | 48 | 282 |
| 2 | 3 | 23.000 | 216 | 49 | 277 |
| 3 | 5 | 21.000 | 207 | 46 | 277 |
| Vergleich | - | 28.000 | 239 | 47 | 281 |

**Ansprüche**

1. Copolyarylensulfide, vorzugsweise Copolyphenylensulfide, die zu 99,5 bis 90 Mol-% bezogen auf das Copolymere aus wiederkehrenden Einheiten der Formel (I)

$\{S-Ar\}$ (I),

in welcher

Ar für $C_6$-$C_{24}$-Arylen, vorzugsweise Phenylen steht

und

0,5 bis 10 Mol-%, bezogen auf das Copolymere aus wiederkehrenden Einheiten der Formel (II)

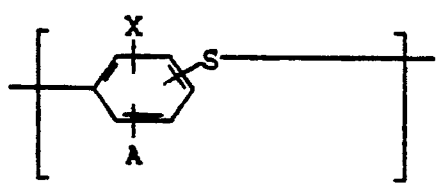

(II),

in welcher

A für einen substituierten Pyrazolon-3-Rest steht,

und

X für Wasserstoff (H), $SO_3H$ steht,

und

gegebenenfalls bis zu 5 Mol-% bezogen auf die Summe der Einheiten der Formeln (I) und (II) aus wiederkehrenden Einheiten der Formel III

$[Ar]_n$ (III),

in welcher

Ar für einen aromatischen Rest mit 6 bis 30 C-Atomen steht und

n für die Zahl 3 oder 4 steht,

wobei die Strukturеinheiten der Formeln (I), (II) und gegebenenfalls (III) überwiegend statistisch im Copolymeren verteilt sein können.

2. Verfahren zur Herstellung der gegebenenfalls verzweigten Co-Polyarylensulfiden, dadurch gekennzeichnet, daß

a) Dihalogenaromaten der Formel (Ia)

$X\{Ar\}X$ (Ia),

in welcher

X für zueinander meta- und/oder paraständige Halogen steht und

Ar für $C_6$-$C_{24}$-Arylen steht,

b) 0-5 Mol-%, bevorzugt 0,1-2,5 Mol-%, bezogen auf die Summe der Dihalogenaromaten der Formel IV und V, eines Tri- oder Tetrahalogenaromaten der Formel

$ArX_n$ (IV),

wobei

Ar ein aromatischer $C_6$-$C_{14}$-Ring oder ein heterocyclischer Rest mit 5 bis 14 Ringatomen ist, wobei bis zu 3 Ring-C-Atome durch Heteroatome wie N, O, S ersetzt sein können,

X für Halogen wie Chlor oder Brom steht und

n für die Zahl 3 oder 4 steht

und

c) Alkalisulfide, bevorzugt Natrium- oder Kaliumsulfid oder deren Mischung, bevorzugt in Form ihrer Hydrate oder wäßrigen Mischungen, gegebenenfalls zusammen mit geringen Mengen Alkalihydroxiden wie Natrium-und Kaliumhydroxid, wobei das molare Verhältnis von (a+b) : c im Bereich von 0,75:1 bis 1,25:1 liegen kann,

d) gegebenenfalls in Anwesenheit von Katalysatoren wie Alkalicarboxylaten, Alkaliphosphaten, Alkaliphosphonaten, Alkalifluoriden, Alkalialkylsulfonaten oder N,N-Dialkylcarbonsäureamiden, wobei dem Reaktionsgemisch 0,2-50 Mol-%, bevorzugt 0,2-25 Mol-%, bezogen auf die Mole Dihalogenaromat, einer Aminosäure zugegeben wird,

und

e) 0,5 bis 10 Mol-% bezogen auf die Summe der Komponenten der Formeln (IV), (V) und (VI) von Dihalogenphenylpyrazol-3-onen der Formel (VII)

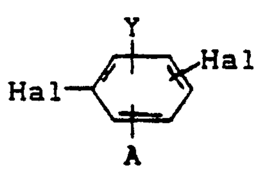

(VII),

in welcher

A für einen Pyrazol-3-Rest steht,

X für Wasserstoff, H, $SO_3H$ und

Hal für Halogen wie Chlor und Brom steht,

miteinander umgesetzt werden.

3. Verwendung von Co-polyarylensulfiden nach Anspruch 1 zur Herstellung von Formkörpern.

Europäisches Patentamt

# EUROPÄISCHER RECHERCHENBERICHT

Nummer der Anmeldung

EP 89 10 3869

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 126 369 (BAYER AG)<br>* Anspruch 1 *<br>--- | 1,2 | C 08 G 75/14<br>C 08 G 75/02 |
| A | EP-A-0 214 470 (BAYER AG)<br>* Anspruch 1; Seite 16, Zeile 22 *<br>--- | 1,2 | |
| D,A | US-A-3 354 129 (J.T. EDMONDS et al.)<br>* Ansprüche 1,6; Spalte 6, Zeilen 12-14 *<br>--- | 1-3 | |
| A | US-A-4 350 810 (D.O. TIESZEN et al.)<br>* Anspruch 1; Spalte 2, Zeilen 57-63 *<br>----- | 1,2 | |

RECHERCHIERTE SACHGEBIETE (Int. Cl.4)

C 08 G 75/00

Der vorliegende Recherchenbericht wurde für alle Patentansprüche erstellt

| Recherchenort | Abschlußdatum der Recherche | Prüfer |
|---|---|---|
| DEN HAAG | 12-06-1989 | PAULSSON R.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)